# EUROPEAN PATENT SPECIFICATION

(11) **EP 2 003 722 B1**
(45) Date of publication and mention of the grant of the patent: **30.11.2011**
(21) Application number: 07740455.6
(22) Date of filing: 23.03.2007
(51) Int. Cl.: H01M 10/04, H01M 10/50

(54) **STACKED CELL**
STAPELZELLE
EMPILEMENT DE CELLULES

(30) Priority: 31.03.2006 JP 2006099090
(43) Date of publication of application: 17.12.2008
(73) Proprietor: Toyota Jidosha Kabushiki Kaisha, Toyota-shi, Aichi 471-8571 (JP)
(72) Inventor: KIMURA, Kenji, Toyota-shi, Aichi 471-8571 (JP)
(74) Representative: TBK
(86) International application number: PCT/JP2007/057017
(87) International publication number: WO 2007/114310

(56) References cited:
- JP-A- 05 159 808
- JP-A- 06 215 794
- JP-A- 2003 017 127
- JP-A- 2004 087 238
- JP-A- 2005 056 655
- JP-A- 2005 071 784
- JP-A- 2005 100 926
- US-A1- 2002 061 436

## Description

### Technical Field

The present invention relates to a stacked type battery.

### Background Art

As for a conventional stacked type battery, for example, Japanese Patent Laying-Open No. 2005-71784 discloses a bipolar battery for the purpose of improving the battery characteristics (Patent Document 1). In Patent Document 1, an electrode stack forming a bipolar battery has a charge collector having a positive electrode active material layer formed on one surface and a negative electrode active material layer formed on the back surface thereof. A cooling tab is connected to the charge collector. The cooling tab is separately attached to the charge collector or is formed by extending a part of the charge collector to the exterior of the stacked type battery.

Furthermore, Japanese Patent Laying-Open No. 2004-31281 discloses a cooling structure of an electrode stacked type battery for the purpose of preventing an increase of components while pressing the battery from the opposite faces and improving cooling performance (Patent Document 2). In Patent Document 2, pressing plates which press the electrode stacked type battery from the opposite faces are formed to protrude from a part of the edge of the electrode stacked type battery to the outside. The protrusion portion of this pressing plate forms a heat dissipation portion which dissipates generated heat from the electrode stacked type battery.

In addition, Japanese Patent Laying-Open No. 2004-319362 discloses a bipolar secondary battery which allows voltage to be sensed for each unit cell for the purpose of improving vibration resistance (Patent Document 3). Japanese Patent Laying-Open No. 2004-87238 discloses a stacked type battery for the purpose of allowing voltage to be measured for each unit cell (Patent Document 4).

In the aforementioned Patent Document 1, heat generated inside the electrode stack is dissipated actively by the cooling tab connected to the charge collector. However, in the case where the cooling tab is separately connected to the charge collector, since the charge collector is thin and fragile, a sophisticated production facility is required to attach the cooling tab without degrading the heat conductivity.

On the other hand, in the case where the cooling tab is formed by extending a part of the charge collector, the charge collector with the cooling tab formed has to be installed in a deposition apparatus for forming a positive electrode active material layer and a negative electrode active material layer. In doing so, due to the cooling tab, the rigidity and the handling ease of the charge collector may be reduced or the deposition apparatus may be increased in size. Moreover, if different kinds of cooling tabs exist, the management thereof may become complicated or the manufacturing costs may be increased with the increasing variety of charge collectors.

### Disclosure of the Invention

An object of the present invention is to solve the problems as described above and to provide a stacked type battery with improved heat dissipation without deteriorating productivity.

A stacked type battery in accordance with the present invention is set forth in claim 1.

According to the stacked type battery configured in this manner, heat generated in each unit cell is dissipated from the projection portion through the sheet member. Here, in the present invention, since the sheet member having the projection portion is arranged between the positive electrode collector and the negative electrode collector, there is no need for providing a projection portion to the positive electrode collector and the negative electrode collector. Therefore, it can be prevented that the production facility of the positive electrode collector and the negative electrode collector becomes sophisticated or the handling of the positive electrode collector and the negative electrode collector in formation of the positive electrode active material layer and the negative electrode active material layer becomes difficult, due to the projection portion. Accordingly, heat generated in the unit cell can be dissipated efficiently without deteriorating the productivity of the stacked type battery.

Preferably, the sheet member is formed of any one of a carbon sheet, aluminum and copper. According to the stacked type battery configured in this manner, the sheet member is formed of such materials having high heat conductivity, so that the heat generated in the unit cell can be dissipated efficiently.

Preferably, the sheet member is formed of a carbon sheet having heat conductivity which is relatively small in a thickness direction and is relatively large in a plane direction. It is noted that the thickness direction is a direction corresponding to the stacked direction of a plurality of unit cells, and the plane direction is a direction extending in a plane orthogonal to the stacked direction of a plurality of unit cells. According to the stacked type battery configured in this manner, heat conduction to the projection portion projecting from between the positive electrode collector and the negative electrode collector to the outside is promoted. Therefore, the heat generated in the unit cell can be dissipated more efficiently.

Preferably, the sheet member is disposed at each of a plurality of locations displaced in a stacked direction of the plurality of unit cells. The sheet member further has a coating portion covering the projection portion. The coating portion is formed of an insulating material. A plurality of sheet members have a same shape. According to the stacked type battery configured in this manner, a plurality of sheet members are formed in the same shape, thereby facilitating the management of the sheet member and reducing the manufacturing cost. In addition, even when the projection portions drawn out from each sheet member are overlapped in the stacked direction of a plurality of unit cells, the coating portion covering the projection portion can prevent short-circuiting between a plurality of unit cells.

Preferably, the stacked type battery further includes a coolant passage to which the projection portion is connected and through which a coolant circulates. The sheet member is disposed at each of a plurality of locations displaced in a stacked direction of the plurality of unit cells. A plurality of sheet members include a first sheet member arranged relatively inside in the stacked direction of the plurality of unit cells and a second sheet member arranged relatively outside. The projection portion is provided such that heat conductivity between the projection portion of the first sheet member and the coolant is relatively large and heat conductivity between the projection portion of the second sheet member and the coolant is relatively small. According to the stacked type battery configured in this manner, the unit cell which is likely to keep heat therein and has low dissipation efficiency can be cooled more actively. Accordingly, a temperature difference between a plurality of unit cells can be prevented.

Preferably, the projection portion of the first sheet member is connected on an upstream side of a coolant flow in the coolant passage, as compared with the projection portion of the second sheet member. According to the stacked type battery configured in this manner, the projection portion of the first sheet member performs heat exchange with coolant having a relatively low temperature, and the projection portion of the second sheet member performs heat exchange with coolant having a relatively high temperature. Therefore, the heat conductivity between the projection portion of the first sheet member and the coolant is larger than the heat conductivity between the projection portion of the second sheet member and the coolant.

As described above, in accordance with the present invention, it is possible to provide a stacked type battery with improved heat dissipation without deteriorating productivity.

### Brief Description of the Drawings

Fig. 1 is a cross-sectional view showing a stacked type battery in an embodiment of the present invention.
Fig. 2 is a perspective view showing a sheet member included in the stacked type battery in Fig. 1.
Fig. 3 is a plan view showing the stacked type battery as viewed from the direction indicated by arrow III in Fig. 1.
Fig. 4 is a perspective view showing the sheet member formed of a carbon sheet.
Fig. 5 is a cross-sectional view showing a first positive electrode formation step in a method of manufacturing a unit cell included in the stacked type battery in Fig. 1.
Fig. 6 is a cross-sectional view showing a second positive electrode formation step in a method of manufacturing a unit cell included in the stacked type battery in Fig. 1.
Fig. 7 is a cross-sectional view showing a first negative electrode formation step in a method of manufacturing a unit cell included in the stacked type battery in Fig. 1.
Fig. 8 is a cross-sectional view showing a second negative electrode formation step in a method of manufacturing a unit cell included in the stacked type battery in Fig. 1.
Fig. 9 is a cross-sectional view showing a layer stacking step in a method of manufacturing a unit cell included in the stacked type battery in Fig. 1.
Fig. 10 is a cross-sectional view showing a cutting step in a method of manufacturing a unit cell included in the stacked type battery in Fig. 1.
Fig. 11 is a perspective view showing a positive electrode collector foil obtained through the steps shown in Fig. 5 and Fig. 6.
Fig. 12 is a cross-sectional view showing a first modification of the sheet member included in the stacked type battery in Fig. 1.
Fig. 13 is a perspective view showing a second modification of the sheet member included in the stacked type battery in Fig. 1.
Fig. 14 is a cross-sectional view of the sheet member along line XIV-XIV in Fig. 13.

### Best Modes for Carrying Out the Invention

An embodiment of the present invention will be described with reference to the figures. It is noted that, in the figures referred to below, the same or corresponding members will be denoted with the same numerals.

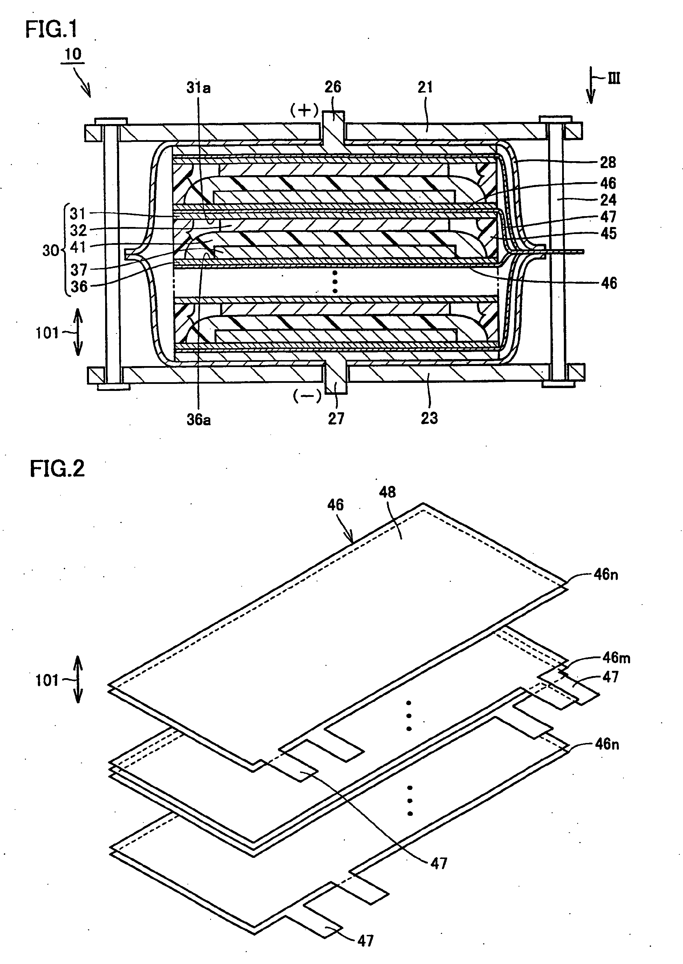

Fig. 1 is a cross-sectional view showing a stacked type battery in an embodiment of the present invention. Referring to Fig. 1, a stacked type battery 10 is mounted as a power source on a hybrid vehicle including an internal combustion engine such as a gasoline engine or a diesel engine and a rechargeable power supply as motive power sources. Stacked type battery 10 is formed of a lithium-ion battery.

Stacked type battery 10 includes a plurality of unit cells 30 stacked in the direction shown by arrow 101 and a sheet member 46 disposed between a plurality of unit cells 30. Stacked type battery 10 has an approximately rectangular parallelepiped shape. Stacked type battery 10 may have a thin-plate shape in which the length of the stacked direction of unit cells 30 is smaller than the length of the other side. A plurality of unit cells 30 are electrically connected in series. Stacked type battery 10 has, for example, a voltage of 200V or higher. Stacked type battery 10 includes, for example, 50 or more unit cells 30.

Each unit cell 30 has a sheet-like positive electrode collector foil 31 and negative electrode collector foil 36, a positive electrode active material layer 32 and a negative electrode active material layer 37 respectively provided to positive electrode collector foil 31 and negative electrode collector foil 36, and an electrolyte layer 41 provided between positive electrode active material layer 32 and negative electrode active material layer 37. Stacked type battery 10 in the present embodiment is a secondary battery in which positive electrode active material layer 32 and negative electrode active material layer 37 are separately provided to two collector foils.

Positive electrode collector foil 31 and negative electrode collector foil 36 have a surface 31a and a surface 36a, respectively. Positive electrode collector foil 31 and negative electrode collector foil 36 are superimposed on each other in the stacked direction of unit cells 30 shown by arrow 101 such that surface 31a and surface 36a face each other at a distance.

Positive electrode collector foils 31 of a plurality of unit cells 30 are all formed in the same shape. Negative electrode collector foils 36 of a plurality of unit cells 30 are all formed in the same shape. Positive electrode collector foil 31 is formed, for example, of aluminum. Negative electrode collector foil 36 is formed, for example, of copper.

Positive electrode active material layer 32 and negative electrode active material layer 37 are formed on surface 31a and surface 36a, respectively. Positive electrode active material layer 32 and negative electrode active material layer 37 oppose each other with electrolyte layer 41 interposed therebetween. Electrolyte layer 41 is provided to cover negative electrode active material layer 37. Electrolyte layer 41 may be provided to cover positive electrode active material layer 32 or may be cover both positive electrode active material layer 32 and negative electrode active material layer 37. Electrolyte layer 41 does not necessarily cover positive electrode active material layer 32 and negative electrode active material layer 37.

Electrolyte layer 41 is a layer formed of a material exhibiting ion conductivity. Because of electrolyte layer 41 being interposed, ion conduction between positive electrode active material layer 32 and negative electrode active material layer 37 becomes smooth, and the output of stacked type battery 10 can be improved. In the present embodiment, electrolyte layer 41 is formed of a solid electrolyte material. Electrolyte layer 41 may be a gel-like electrolyte or a liquid electrolyte. In this case, electrolyte layer 41 is formed by a separator impregnated with electrolyte.

Unit cell 30 additionally has an insulating resin 45 as an insulating member formed of an insulating material. Insulating resin 45 is provided along the edges of surfaces 31a and 36a between positive electrode collector foil 31 and negative electrode collector foil 36. Insulating resin 45 is provided to surround the periphery of positive electrode active material layer 32, negative electrode active material layer 37 and electrolyte layer 41. Positive electrode active material layer 32, negative electrode active material layer 37 and electrolyte layer 41 are enclosed in a space between positive electrode collector foil 31 and negative electrode collector foil 36 by insulating resin 45. Insulating resin 45 is formed of an insulating material and formed, for example, of epoxy resin, acrylic resin, silicone rubber or fluorine rubber.

A plurality of unit cells 30 are stacked such that positive electrode collector foil 31 and negative electrode collector foil 36 adjoin each other between unit cells 30 adjacent to each other. A positive electrode terminal 26 is connected to positive electrode collector foil 31 arranged on one end of the stacked direction of unit cells 30. A negative electrode terminal 27 is connected to negative electrode collector foil 36 arranged on the other end of the stacked direction of unit cells 30.

A plurality of stacked unit cells 30 are covered with a lamination film 28 as a package. For example, a base material made of aluminum which is coated with poly ethylene terephthalate (PET) resin is used as lamination film 28. Lamination film 28 is provided to mainly prevent intrusion of moisture. Lamination film 28 may be eliminated depending on the kind of electrolyte layer 41 or the like.

On the opposite sides of a plurality of stacked unit cells 30, restraining plates 21 and 23 are disposed. Restraining plate 21 and restraining plate 23 are coupled to each other by a bolt 24 extending in the stacked direction of unit cells 30. A plurality of unit cells 30 are restrained in their stacked direction by the axial force of bolt 24. Although bolt 24 is used as a restraining member which restrains a plurality of unit cells 30 in the present embodiment, the present invention is not limited thereto and the restraining member may be, for example, rubber, string, band, tape, or the like which produces a fastening force in the stacked direction of unit cells 30.

Fig. 2 is a perspective view showing a sheet member included in the stacked type battery in Fig. 1. Referring to Fig. 1 and Fig. 2, sheet member 46 is sandwiched between positive electrode collector foil 31 and negative electrode collector foil 36 between a plurality of unit cells 30 adjacent to each other. Sheet member 46 is in contact with positive electrode collector foil 31 and negative electrode collector foil 36. Sheet member 46 is provided at each of a plurality of locations displaced in the stacked direction of unit cells 30. Sheet member 46 may be disposed at all of the positions between unit cells 30 adjacent to each other or may be disposed at a part of them.

Sheet member 46 has a base portion 48 positioned between positive electrode collector foil 31 and negative electrode collector foil 36 and a cooling tab 47 projecting from between positive electrode collector foil 31 and negative electrode collector foil 36. Base portion 48 and cooling tab 47 are integrally formed.

In the present embodiment, base portion 48 has an approximately rectangular shape corresponding to the shape of positive electrode collector foil 31 and negative electrode collector foil 36. Cooling tab 47 is formed to protrude from the end side of base portion 48. Cooling tab 47 projecting from between positive electrode collector foil 31 and negative electrode collector foil 36 is drawn outside of the lamination film 28.

Sheet member 46 is formed of a material having excellent heat conductivity. Sheet member 46 is formed of a conductive material. Sheet member 46 is formed, for example, of aluminum, copper or a carbon sheet. Sheet member 46 may be formed of the same material as positive electrode collector foil 31 or negative electrode collector foil 36. The thickness of sheet member 46 may be larger than the thickness of positive electrode collector foil 31 and negative electrode collector foil 36. The thickness of sheet member 46 is determined in consideration of the heat conductivity and the like of the material forming sheet member 46.

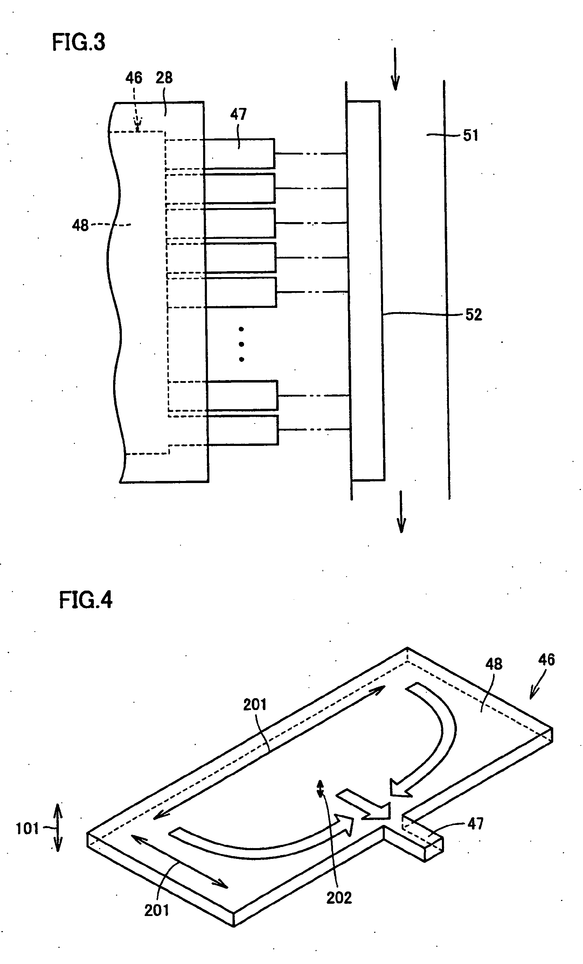

Fig. 3 is a plan view showing the stacked type battery as viewed from the direction shown by arrow III in Fig. 1. Referring to Fig. 1 to Fig. 3, stacked type battery 10 further includes a cooling air passage 51 through which cooling air circulates. Cooling air passage 51 may be a passage to which cooling air is forced to be supplied using a motor-driven fan or the like or may be a passage through which the air taken into the vehicle during vehicle travel is circulated. A fin 52 as a cooler is disposed in cooling air passage 51. Cooling tab 47 drawn out from lamination film 28 is connected to fin 52. The end of cooling tab 47 may be arranged directly in cooling air passage 51 without providing fin 52. The air subjected to fin 52 may not necessarily flow.

Because of such a configuration, heat generated in unit cell 30 transfers to base portion 48 and cooling tab 47 of sheet member 46 in order, so that heat exchange is performed between the cooling air circulating in cooling air passage 51 and cooling tab 47. Here, since base portion 48 and cooling tab 47 are integrally formed in the present embodiment, heat conduction through sheet member 46 is promoted. The heat generated in unit cell 30 is actively dissipated to the cooling air circulating through cooling air passage 51, thereby improving the cooling efficiency of stacked type battery 10.

Cooling tab 47 of each sheet member 46 is provided so as not to overlap another in the stacked direction of unit cells 30. Of a plurality of sheet members 46, one disposed relatively inside in the stacked direction of unit cells 30 is called sheet member 46m, and one disposed relatively outside is called a sheet member 46n. In other words, in the stacked direction of unit cells 30, sheet member 46m is arranged at a position relatively far from the outer shell of a plurality of unit cells 30, and sheet member 46n is arranged at a position relatively close to the outer shell of a plurality of unit cells 30. Here, cooling tab 47 of sheet member 46m is connected to fin 52 on the upstream side of the cooling air flow in cooling air passage 51, as compared with cooling tab 47 of sheet member 46n. Preferably, cooling tabs 47 of sheet members 46 are each provided in such a manner as to be displaced gradually from the downstream side to the upstream side of the cooling air flow in cooling air passage 51 as they shift from the outside to the inside of the stacked direction of unit cells 30.

In such a configuration, cooling tab 47 of sheet member 46m performs heat exchange with the cooling air having a relatively small temperature, and cooling tab 47 of sheet member 46n performs heat exchange with the cooling air having a relatively large temperature after the heat exchange with cooling tab 47 of sheet member 46m. As a result, the heat conductivity between the cooing air and cooling tab 47 of sheet member 46m is larger than the heat conductivity between the cooling air and cooling tab 47 of sheet member 46n.

Unit cell 30 in contact with sheet member 46m is likely to keep heat therein and has a low cooling efficiency since it is arranged at a position far from the outer shell of stacked type battery 10. By contrast, unit cell 30 in contact with sheet member 46n is likely to release heat and has a high cooling efficiency since it is arranged at a position close to the outer shell of stacked type cell 10. Therefore, according to the configuration of sheet member 46 in Fig. 2, unit cell 30 having a low cooling efficiency can be cooled more actively through cooling tab 47 of sheet member 46m. Accordingly, a temperature difference between a plurality of unit cells 30 can be prevented and the full cell performance of unit cell 30 is exploited, and in addition, the cell life of unit cell 30 can be improved.

A temperature sensor as a temperature detection portion or a voltage sensor as a voltage detection portion may be connected to cooling tab 47. Because of such a configuration, the internal temperature or voltage of unit cell 30 corresponding to the position provided with the sensor can be detected, and the detected value can be used for control of charging/discharging current of stacked type battery 10, control of the motor-driven fan supplying cooling air, and the like.

Fig. 4 is a perspective view showing a sheet member formed of a carbon sheet. Referring to Fig. 4, sheet member 46 in the figure is formed of a carbon sheet having anisotropy with respect to heat conductivity. This carbon sheet has a relatively large heat conductivity in the plane direction of sheet member 46 (the direction shown by arrow 201) and has a relatively small heat conductivity in the thickness direction of sheet member 46 (the direction shown by arrow 202). The use of the carbon sheet having this characteristic allows the heat transferred from unit cell 30 to sheet member 46 to be transferred further from base portion 48 to cooling tab 47 quickly, so that the cooling efficiency of stacked type battery 10 can be improved more effectively.

Next, each member forming stacked type battery 10 in Fig. 1 will be described in detail. Positive electrode active material layer 32 includes a positive electrode active material and a solid polyelectrolyte material. Positive electrode active material layer 32 may include a supporting salt (lithium salt) for increasing ion conductivity, a conduction agent for increasing electron conductivity, NMP (N-methyl-2-pyrrolidone) serving as a solvent for adjusting slurry viscosity, AIBN (azobisisobutyronitrile) serving as a polymerization initiator, and the like.

As a positive electrode active material, a composite oxide of lithium and a transition metal can be used, which is generally used in a lithium-ion secondary battery. Examples of the positive electrode active material are a Li·Co-based composite oxide such as LiCoO₂, a Li·Ni-based composite oxide such as LiNiO₂, a Li·Mn-based composite oxide such as spinel LiMn₂O₄, a Li·Fe-based composite oxide such as LiFeO₂, and the like. The other examples may be a phosphate compound or sulfate compound of a transition metal and lithium such as LiFePO₄; a transition metal oxide or sulfide such as V₂O₅, MnO₂, TiS₂, MoS₂, or MoO₃; PbO₂, AgO, NiOOH, and the like.

The solid polyelectrolyte material is not particularly limited as long as it is polymer exhibiting ion conductivity and may be, for example, polyethylene oxide (PEO), polypropylene oxide (PPO), copolymer thereof, or the like. Such polyalkylene oxide-based polymer easily dissolves lithium salt such as LiBF₄, LiPF₆, LiN(SO₂CF₃)₂, LiN(SO₂C₂F₅)₂, or the like. The solid polyelectrolyte material is included in at least one of positive electrode active material layer 32 and negative electrode active material layer 37. More preferably, the solid polyelectrolyte material is included in both of positive electrode active material layer 32 and negative electrode active material layer 37.

As a supporting salt, Li(C₂F₅So₂)₂N, LiBF₄, LiPF₆, LiN(SO₂C₂F₅)₂, a mixture thereof, or the like may be used. As a conduction agent, acetylene black, carbon black graphite, or the like may be used.

Negative electrode active material layer 37 includes a negative electrode active material and a solid polyelectrolyte material. The negative electrode active material layer may include a supporting salt (lithium salt) for increasing ion conductivity, a conduction agent for increasing electron conductivity, NMP (N-methyl-2-pyrrolidone) serving as a solvent for adjusting slurry viscosity, AIBN (azobisisobutyronitrile) serving as a polymerization initiator, and the like.

As a negative electrode active material, a material generally used in a lithium-ion secondary battery can be used. Note that when a solid electrolyte material is used, a composite oxide of carbon or lithium and a metal oxide or a metal may be preferably used as a negative electrode active material. More preferably, the negative electrode active material is a composite oxide of carbon or lithium and a transition metal.

Further preferably, the transition metal is titanium. In other words, the negative electrode active material is further preferably a composite oxide of titanium oxide or titanium and lithium.

As the solid electrolyte material forming electrolyte layer 41, for example, a solid polyelectrolyte material such as polyethylene oxide (PEO), polypropylene oxide (PPO), or copolymer thereof can be used. The solid electrolyte material includes a supporting salt (lithium salt) for ensuring ion conductivity. As a supporting salt, LiBF₄, LiPF₆, LiN(SO₂CF₃)₂, LiN(SO₂C₂F₅)₂, a mixture thereof, or the like may be used.

Furthermore, specific examples of the materials forming positive electrode active material layer 32, negative electrode active material layer 37 and electrolyte layer 41 are shown in Table 1 to Table 3. Table 1 shows the specific examples in a case where electrolyte layer 41 is an organic solid electrolyte, Table 2 shows the specific examples in a case where electrolyte layer 41 is an inorganic solid electrolyte, and Table 3 shows the specific examples in a case where electrolyte layer 41 is a gel-like electrolyte.

**Table 1**

| positive electrode material | negative electrode material | solid electrolyte material | note |
|---|---|---|---|
| LiMn₂O₄ | Li metal | P(EO/MEEGE) | • electrolyte salt : LiBF₄ |
| - | Li metal | P(EO/PEG-22) | • electrolyte salt : LiN(CF₃SO₂)₂(LiTFSI) |
| LiCoO₂ | carbon | PVdF-based | - |
| LiCoO₂ | Li metal | ether-based polymer P(EO/EM/AGE) | • electrolyte salt : LiTFSI |
| | | | • ion conducting material binder: blend P(EO/EM)+LiBF₄ in positive electrode |
| Li_{0.33}MnO₂ | Li metal | P(EO/EM/AGE) | • electrolyte salt : LiTFSI |
| | | | • ion conducting material binder: blend PEO-based solid polymer+LiTFSI in positive electrode |
| Li_{0.33}MnO₂ | Li metal | PEO base+inorganic additive | • electrolyte salt : LiClO₄ |
| | | | • ion conducting material : blend KB+PEG+LiTFSI in positive electrode |
| - | - | PEG-PMMA+PEG-boric acid ester | • electrolyte salt : LiTFSI, BGBLi |
| - | - | PEO based+10 mass%0.6Li₂S+0.4SiS₂ | • electrolyte salt : LiCF₃SO₃ |
| - | Li metal | PEO based+perovskite La_{0.55}Li_{0.35}TiO₃ | • electrolyte salt : LiCF₃SO₃ |
| Li metal | - | styrene/ethylene oxide-block-graft polymer (PSEO) | • electrolyte salt : LiTFSI • ion conducting material : blend KB+PVdF+PEG+LiTFSI in positive electrode |
| LiCoO₂ | Li metal | P(DMS/EO)+polyether cross link | - |
| Li_{0.33}Mn_{O2} | Li metal | urethane acrylate-based prepolymer composition (PUA) | • electrolyte salt : LiTFSI |
| | | | • ion conducting material : blend KB+PVdF+PEG+LiTFSI in positive electrode |
| - | - | multi-branched graft polymer (MMA+CMA+POEM) | • electrolyte salt : LiClO₄ |
| LiNi_{0.8}Co_{0.2}O₂ | Li metal | PEO/high-branched polymer/filler-based composite solid electrolyte (PEO+HBP+BaTiO₃) | • electrolyte salt : LiTFSI |
| | | | • blend SPE+AB in positive electrode |
| - | - | PME400+Group 13 metal alkoxide (as Lewis acid) | • electrolyte salt : LiCl |
| - | - | matrix including poly(N-methyl vinyl imidazoline)(PNMVI) | •electrolyte salt : LiClO₄ |
| LiCoO₂ | Li metal | polymerize metoxypolyethyleneglycol monomethyl mesoacrylate using ruthenium complex by living radical polymeriazation additionally polymerize with styrene | • electrolyte salt : LiClO₄ |
| | | | • positive electrode conducting agent KB+ binder PVdF |
| LiCoO₂ | Li metal | P(EO/EM)+ether-based plasticizer | • electrolyte salt : LiTFSI |
| | | | • positive electrode conducting agent KB+binder PVdF |

**Table 2**

| positive electrode material | negative electrode material | solid electrolyte material | note |
|---|---|---|---|
| LiCoO₂ | In | 95(0.6Li₂S·0.4SiS₂)·5Li₄SiO₄ (Li₂S-SiS₂₋based melt-quenched glass) | • state : glass state : glass |
| - | - | 70Li₂S·30P₂S₅ Li_{1.4}P_{0.6}S_{2.2} sulfide glass (Li₂S-P₂S₅-based glass ceramic) | • state : glass |
| | | | • production method : mechanochemial |
| - | - | Li_{0.35}La_{0.55}TiO₃(LLT) (perovskite structure) | • state : ceramic |
| | | | • produce porous solid electrolyte and fill pores with active material sol |
| - | - | 80Li₂S·20P₂S₅ (Li₂S-P₂S₅-based glass ceramic) | • state : glass |
| | | | • production method : mechanochemical |
| - | - | xSrTiO₃·(1-x)LiTaO₃ (perovskite oxide) | • state : ceramic |
| LiCoO₂ | Li-In metal | Li_{3.4}Si_{0.4}P_{0.6}S₄ (thio-LISICON Li ion conductor) | • state : ceramic • state : ceramic |
| - | - | (Li_{0.1}La_{0.3})ₓZr_{y}Nb_{1-y}O₃ (perovskite oxide) | • state : ceramic • state : ceramic |
| - | - | Li₄B₇O₁₂Cl | • state : ceramic |
| | | | • compose PEG as organic composite material |
| - | - | Li₄GeS₄-Li₃PS₄-based crystal Li_{3.25}Ge_{0.25}P_{0.75}S₄ • state (thio-LISICON Li ion conductor) | ceramic |
| - | Li metal In metal | 0.01Li₃PO₄-0.63Li₂S-0.36SiS₂ (thio-LISICON Li ion conductor) | • state ceramic |
| LiCoO₂LiFePO₄ LiMn_{0.6}Fe_{0.4}PO₄ | Li metal V₂O₅ | Li₃PO₄₋ₓNₓ(LIPON) (lithium phosphate oxynitride glass) | • state : glass • state : glass |
| LiNi_{0.8}Co_{0.15} Li metal Al_{0.05}O₂ | Li metal | Li₃InBr₃Cl₃ (rock salt-type Li ion conductor) | • state : ceramic • state : ceramic |
| - | - | 70Li₂S·(30-x)P₂S₅·xP₂O₅ (Li₂S-P₂S₅-P₂O₅-based glass ceramic) | • state : glass • state : glass |
| LiCoO₂ or the like | Li metal Sn-basedoxide | Li₂O-B₂O₃-P₂O₅-based, Li₂O-V₂O₅-SiO₂-based, Li₂O-TiO₂-P₂O₅-based, LVSO, and the like | • state : glass |
| - | - | LiTi₂(PO₃)₄(LTP) (NASICON-type structure) | • state : ceramic |

**Table 3**

| positive electrode material | negative electrode material | polymer base material | note |
|---|---|---|---|
| Ni-based collector | Li metal | acrylonitrile-vinylacetate (PAN-VAc-based gel electrolyte) LiN(CF₃SO₂)₂ | EC+PC |
| | | | • solvent : • electrolyte salt : LiBF₄, LiPF₆, |
| lithium electrode | lithium electrode | triethylene glycol metyl methacrylate (polymethyl methacrylate (PMMA)-based gel electrolyte) | • solvent : EC+PC |
| | | | • electrolyte salt : LiBF₄ |
| V₂O₅/PPy composite Li | metal | methyl methacrylate (PMMA gel electrolyte) | • solvent : EC+DEC |
| | | | • electrolyte salt : LiClO₄ |
| Li metal | Li metal | PEO/PS polymer blend gel electrolyte | • solvent : EC+PC |
| | | | • electrolyte salt : LiClO₄ |
| Li metal | Li metal | alkylene oxide-based polyelectrolyte | • solvent : PC |
| | | | • electrolyte salt : LiClO₄ |
| Li metal and LiCoO₂ | Li metal | alkylene oxide-based polyelectrolyte | • solvent : EC+GBL |
| | | | • electrolyte salt : LiBF₄ |
| Li metal | Li metal | polyolefin-based polymer | • solvent : EC+PC |
| | | | • electrolyte salt : LiBF₄ |
| Li_{0.36}CoO₂ Li | metal | poly vinylidene fluoride (PVdF)+propylene hexafluoride (HFP) | • solvent EC+DMC |
| | | | (PVdF-HFP gel electrolyte) electrolyte salt: LiN(CF₂SO₂)₂ |
| LiCoO₂ | Li metal | PEO-based and acrylic polymer • solvent : | EC+PC |
| | | | • electrolyte salt : LiBF₄ |
| Li metal | Li metal | trimethylol propane ethoxylate acrylate (ether-based polymer) | • solvent : PC |
| | | | • electrolyte salt : LiBETI, LiBF₄, LiPF₆ |
| - | - | EO-PO copolymer | • electrolyte salt : LiTFSI, LiBF₄, LiPF₆ |
| - | - | polyaziridine compound | • solvent: EC+DEC |
| | | | • electrolyte salt : LIPF₆ |
| - | PAS (polyacene) | PVDF-EFP gel electrolyte | • solvent : PC, EC+DEC |
| | | | • electrolyte salt : LiClO₄, Li(C₂F₅SO₂)₂N |
| - | - | urea-based lithium polymer gel electrolyte | • solvent : EC+DMC |
| | | | • electrolyte salt : LiPF₆ |
| - | - | polyether/polyurethane-based (PEO-NCO) gel electrolyte | • solvent : PC |
| | | | • electrolyte salt : LiClO₄ |
| - | - | cross-linked polyalkylene oxide-based gel polymer electrolyte | - |

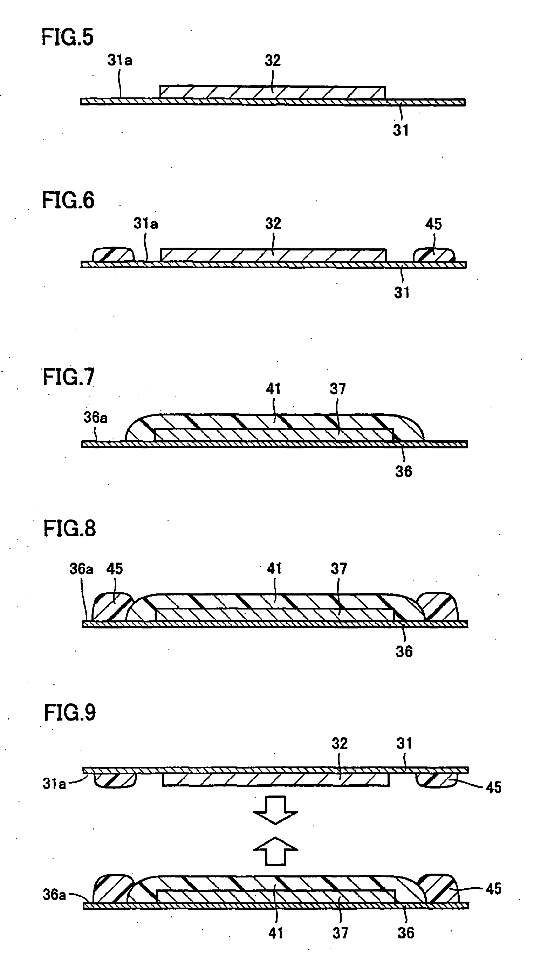

Next, a method of manufacturing unit cell 30 will be described. Fig. 5 to Fig. 10 are cross-sectional views showing the steps of the method of manufacturing the unit cell included in the stacked type battery in Fig. 1. Referring to Fig. 5, through the deposition step such as sputtering, positive electrode active material layer 32 is formed on surface 31 a of positive electrode collector foil 31. Referring to Fig. 6, insulating resin 45 is applied on surface 31a to surround the periphery of positive electrode active material layer 32.

Referring to Fig. 7, similarly to the step shown in Fig. 5, negative electrode active material layer 37 is formed on surface 36a of negative electrode collector foil 36. In addition, electrolyte layer 41 is formed on surface 36a to cover negative electrode active material layer 37. Referring to Fig. 8, insulating resin 45 is applied on surface 36a to surround the periphery of negative electrode active material layer 37 and electrolyte layer 41.

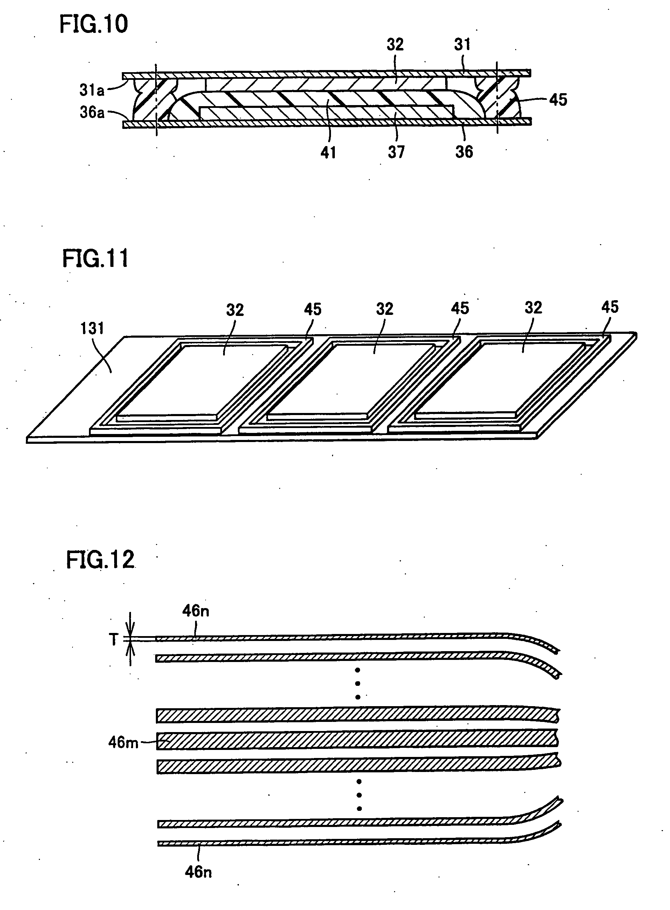

Referring to Fig. 9, positive electrode collector foil 31 and negative electrode collector foil 36 are superimposed on each other. Insulating resins 45 respectively applied on positive electrode collector foil 31 and negative electrode collector foil 36 are cured in a state in which they are brought into contact with each other. Then, positive electrode collector foil 31 and negative electrode collector foil 36 are integrated. Referring to Fig. 10, the edges of positive electrode collector foil 31 and negative electrode collector foil 36 are cut so that a cut surface is formed in insulating resin 45. Through the steps as described above, unit cell 30 included in stacked type battery 10 in Fig. 1 is completed.

Fig. 11 is a perspective view showing the positive electrode collector foil obtained through the steps shown in Fig. 5 and Fig. 6. Referring to Fig. 11, in the steps shown in Fig. 5 and Fig. 6, positive electrode active material layer 32 and insulating resin 45 may be formed in each of a plurality of locations spaced apart from each other on one sheet of positive electrode collector foil 131. Similarly, in the steps shown in Fig. 7 and Fig. 8, negative electrode active material layer 37, electrolyte layer 41 and insulating resin 45 may be formed in each of a plurality of locations spaced apart from each other on one sheet of negative electrode collector foil. Thereafter, the stacking step and the cutting step respectively shown in Fig. 9 and Fig. 10 are performed so that a plurality of unit cells 30 can be fabricated collectively.

Stacked type battery 10 in the embodiment of the present invention includes a plurality of stacked unit cells 30 each having positive electrode collector foil 31 as a positive electrode collector and negative electrode collector foil 36 as a negative electrode collector, and sheet member 46 arranged between a plurality of unit cells 30 adjacent to each other and sandwiched between positive electrode collector foil 31 and negative electrode collector foil 36. Positive electrode collector foil 31 and negative electrode collector foil 36 are respectively provided with positive electrode active material layer 32 and negative electrode active material layer 37. Positive electrode collector foil 31 and negative electrode collector foil 36 are superimposed on each other such that positive electrode active material layer 32 and negative electrode active material layer 37 oppose each other with electrolyte layer 41 as electrolyte interposed therebetween. Sheet member 46 has cooling tab 47 as a projection portion projecting from between positive electrode collector foil 31 and negative electrode collector foil 36.

According to stacked type battery 10 in the present embodiment of the present invention as configured in this manner, sheet member 46 arranged between a plurality of unit cells 30 can improve the cooling efficiency of stacked type battery 10. Here, in the present embodiment, since cooling tab 47 is provided to sheet member 46, respective different kinds of positive electrode collector foil 31 and negative electrode collector foil 36 need not be prepared corresponding to the position at which cooling tab 47 is drawn out. Therefore, during production of stacked type battery 10, positive electrode collector foil 31 and negative electrode collector foil 36 can be easily managed, and the manufacturing cost can be kept low. In addition, in the steps shown in Fig. 5 to Fig. 10, there is no need for handling positive electrode collector foil 31 and negative electrode collector foil 36 provided with cooling tab 47. Therefore, the handling of positive electrode collector foil 31 and negative electrode collector foil 36 can be facilitated, thereby improving the production efficiency and yields. Moreover, the size increase of the deposition apparatus and the like can be avoided. In addition, in the present embodiment, the cooling efficiency of stacked type battery 10 can be controlled appropriately by changing the location where sheet member 46 is disposed.

Although, in the present embodiment, stacked type battery 10 formed of a lithium-ion battery has been described, the present invention is not limited thereto and stacked type battery 10 may be formed of a secondary battery other than a lithium-ion battery.

Furthermore, stacked type battery 10 may be mounted on a Fuel Cell Hybrid Vehicle (FCHV) having a fuel cell and a secondary battery as driving sources or an Electric Vehicle (EV). In the hybrid vehicle in the present embodiment, an internal combustion engine is driven at an optimum fuel efficiency operation point, while in a fuel cell hybrid vehicle, a fuel cell is driven at an optimum electricity generation operation point. In addition, as for the use of a secondary battery, there is basically no difference between both hybrid vehicles.

Fig. 12 is a cross-sectional view showing a first modification of the sheet member included in the stacked type battery in Fig. 1. Referring to Fig. 12, in this modification, sheet member 46m disposed inside in the stacked direction of unit cells 30 has a relatively large thickness and sheet member 46n arranged outside has a relatively small thickness. Preferably, sheet members 46 are formed to have thicknesses gradually increasing as they shift from the outside to the inside in the stacked direction of unit cells 30.

Adjusting thickness T of sheet member 46 in this manner also results in such a configuration in that the heat conductivity between the cooling air and cooling tab 47 of sheet member 46m is larger than the heat conductivity between the cooling air and cooling tab 47 of sheet member 46n. Therefore, a temperature difference between a plurality of unit cells 30 can be prevented.

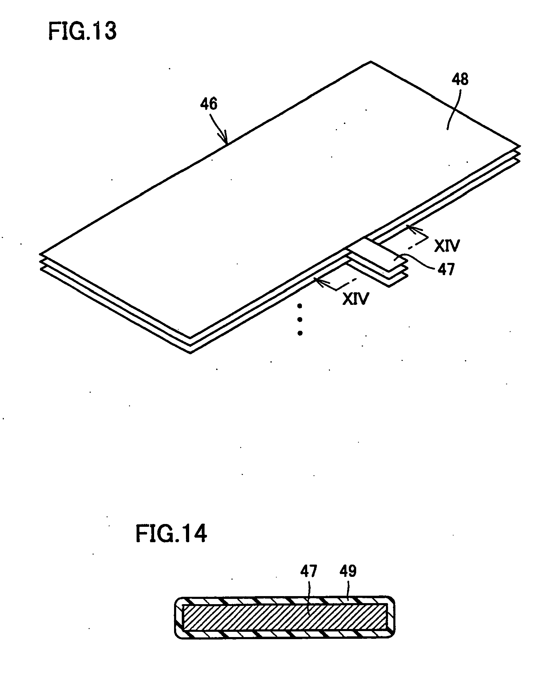

Fig. 13 is a perspective view showing a second modification of the sheet member included in the stacked type battery in Fig. 1. Fig. 14 is a cross-sectional view of the sheet member along line XIV-XIV in Fig. 13. Referring to Fig. 13 and Fig. 14, in this modification, a plurality of sheet members 46 all have the same shape. Cooling tabs 47 are provided to be superimposed on each other in the stacked direction of unit cells 30. Cooling tab 47 is covered with a coating portion 49 formed of an insulating material.

In such a configuration, sheet member 46 is of one kind, so that the manufacturing cost thereof can be reduced. In addition, provision of coating portion 49 prevents short-circuiting between a plurality of unit cells 30.

It should be understood that the embodiment disclosed herein is illustrative rather than limitative in all respects. The scope of the present invention is shown not by the foregoing description but by the claims, and it is intended that equivalents to the claims and all modifications within the claims should be embraced.

### Industrial Applicability

The present invention is mainly applied to a power source of a hybrid vehicle having an internal combustion engine and a rechargeable power source as motive power sources.

## Claims

1. A stacked type battery comprising:
a plurality of unit cells (30) stacked, each having a positive electrode collector (31) and a negative electrode collector (36) respectively provided with a positive electrode active material layer (32) and a negative electrode active material layer (37) and superimposed on each other such that said positive electrode active material layer (32) and said negative electrode active material layer (37) oppose each other with an electrolyte (41) interposed therebetween; and
a sheet member (46) which has heat conductivity and is arranged between said plurality of unit cells (30) adjacent to each other and sandwiched between said positive electrode collector (31) and said negative electrode collector (36),
said sheet member (46) having a projection portion (47) projecting from between said positive electrode collector (31) and said negative electrode collector (36) to dissipate heat generated in the plurality of unit cells (30) from the projection portion (47) through the sheet member (46).

2. The stacked type battery according to claim 1, wherein said sheet member (46) is formed of any one of a carbon sheet, aluminum and copper.

3. The stacked type battery according to claim 1, wherein said sheet member (46) is formed of a carbon sheet having heat conductivity which is relatively small in a thickness direction and is relatively large in a plane direction.

4. The stacked type battery according to claim 1, wherein
said sheet member (46) is disposed at each of a plurality of locations displaced in a stacked direction of said plurality of unit cells (30),
said sheet member (46) further has a coating portion (49) covering said projection portion (47), and said coating portion (49) is formed of an insulating material, and
a plurality of said sheet members (46) have a same shape.

5. The stacked type battery according to claim 1, further comprising a coolant passage (51) to which said projection portion (47) is connected and through which a coolant circulates, wherein
said sheet member (46) is disposed at each of a plurality of locations displaced in a stacked direction of said plurality of unit cells (30),
a plurality of said sheet members (46) include a first sheet member (46m) arranged relatively inside in the stacked direction of said plurality of unit cells (30) and a second sheet member (46n) arranged relatively outside, and
said projection portion (47) is provided such that heat conductivity between said projection portion (47) of said first sheet member (46m) and the coolant is relatively large and heat conductivity between said projection portion (47) of said second sheet member (46n) and the coolant is relatively small.

6. The stacked type battery according to claim 5, wherein said projection portion (47) of said first sheet member (46m) is connected on an upstream side of a coolant flow in said coolant passage (51), as compared with said projection portion (47) of said second sheet member (46n).

## Patentansprüche

1. Stapelbatterie mit:
einer Vielzahl von gestapelten Einheitszellen (30), von denen jede einen positiven Elektrodenkollektor (31) und einen negativen Elektrodenkollektor (36) hat, die jeweils mit einer positiven Elektrodenaktivmaterialschicht (32) und einer negativen Elektrodenaktivmaterialschicht (37) versehen sind und derart aufeinander liegen, dass die positive Elektrodenaktivmaterialschicht (32) und die negative Elektrodenaktivmaterialschicht (37) einander mit einem dazwischen liegenden Elektrolyten (41) gegenüberliegen; und
einem Lagenbauteil (46), das Wärmeleitfähigkeit hat und zwischen der Vielzahl von aneinander grenzenden Einheitszellen (30) angeordnet und zwischen dem positiven Elektrodenkollektor (31) und dem negativen Elektrodenkollektor (36) eingeschoben ist,
wobei das Lagenbauteil (46) einen Vorsprungsabschnitt (47) hat, der von zwischen dem positiven Elektrodenkollektor (31) und dem negativen Elektrodenkollektor (36) vorspringt, um von dem Vorsprungsabschnitt (47) über das Lagenbauteil (46) Wärme abzuführen, die in der Vielzahl von Einheitszellen (30) erzeugt wird.

2. Stapelbatterie nach Anspruch 1, wobei das Lagenbauteil (46) aus entweder einer Kohlenstofflage, Aluminium oder Kupfer ausgebildet ist.

3. Stapelbatterie nach Anspruch 1, wobei das Lagenbauteil (46) aus einer Kohlenstofflage mit Wärmeleitfähigkeit ausgebildet ist, die in Dickenrichtung verhältnismäßig klein und in Ebenenrichtung verhältnismäßig groß ist.

4. Stapelbatterie nach Anspruch 1, wobei
das Lagenbauteil (46) an jeder von einer Vielzahl von Stellen angeordnet ist, die in einer Stapelrichtung der Vielzahl von Einheitszellen (30) versetzt sind,
das Lagenbauteil (46) außerdem einen Beschichtungsabschnitt (49) hat, der den Vorsprungsabschnitt (47) bedeckt, und der Beschichtungsabschnitt (49) aus einem isolierenden Material ausgebildet ist und
eine Vielzahl der Lagenbauteile (46) eine gleiche Form hat.

5. Stapelbatterie nach Anspruch 1, mit außerdem einem Kühlmitteldurchlass (51), mit dem der Vorsprungsabschnitt (47) verbunden ist und durch den ein Kühlmittel zirkuliert, wobei
das Lagenbauteil (46) an jeder von einer Vielzahl von Stellen angeordnet ist, die in einer Stapelrichtung der Vielzahl von Einheitszellen (30) versetzt sind,
eine Vielzahl der Lagenbauteile (46) ein erstes Lagenbauteil (46m), das in der Stapelrichtung der Vielzahl von Einheitszellen (30) verhältnismäßig innen angeordnet ist, und ein zweites Stapelbauteil (46n), das verhältnismäßig außen angeordnet ist, umfasst und
der Vorsprungsabschnitt (47) derart vorgesehen ist, dass die Wärmeleitfähigkeit zwischen dem Vorsprungsabschnitt (47) des ersten Lagenbauteils (46m) und dem Kühlmittel verhältnismäßig groß ist und die Wärmeleitfähigkeit zwischen dem Vorsprungsabschnitt (47) des zweiten Lagenbauteils (46n) und dem Kühlmittel verhältnismäßig klein ist.

6. Stapelbatterie nach Anspruch 5, wobei der Vorsprungsabschnitt (47) des ersten Lagenbauteils (46m) verglichen mit dem Vorsprungsabschnitt (47) des zweiten Lagenbauteils (46n) auf einer stromaufwärtigen Seite eines Kühlmittelstroms in dem Kühlmitteldurchlass (51) verbunden ist.

## Revendications

1. Batterie du type empilé comprenant :
une pluralité de cellules unitaires (30) empilées, chacune ayant un collecteur d'électrode positive (31) et un collecteur d'électrode négative (36) respectivement pourvus d'une couche de matière active d'électrode positive (32) et d'une couche de matière active d'électrode négative (37) et superposées l'une sur l'autre de façon que ladite couche de matière active d'électrode positive (32) et ladite couche de matière active d'électrode négative (37) soient en face l'une de l'autre avec un électrolyte (41) interposé entre elles ; et
un élément en feuille (46) qui a une certaine conductivité thermique et est disposé entre ladite pluralité de cellules unitaires (30) adjacentes les unes aux autres et pris en sandwich entre ledit collecteur d'électrode positive (31) et ledit collecteur d'électrode négative (36),
ledit élément en feuille (46) ayant une partie en saillie (47) faisant saillie entre ledit collecteur d'électrode positive (31) et ledit collecteur d'électrode négative (36) pour dissiper, à partir de la partie en saillie (47) à travers l'élément en feuille (46), de la chaleur engendrée dans la pluralité de cellules unitaires (30).

2. Batterie du type empilé selon la revendication 1, dans laquelle ledit élément en feuille (46) est fait de l'un quelconque d'une feuille de carbone, d'aluminium et de cuivre.

3. Batterie du type empilé selon la revendication 1, dans laquelle ledit élément en feuille (46) est fait d'une feuille de carbone ayant une conductivité thermique qui est relativement petite dans le sens de l'épaisseur et qui est relativement grande dans le sens du plan.

4. Batterie du type empilé selon la revendication 1,
dans laquelle ledit élément en feuille (46) est disposé à chacun d'une pluralité d'emplacements décalés dans le sens de l'empilement de ladite pluralité de cellules unitaires (30),
dans laquelle ledit élément en feuille (46) possède en outre une partie de revêtement (49) couvrant ladite partie en saillie (47), et ladite partie de revêtement (49) est faite d'une matière isolante, et
dans laquelle une pluralité desdits éléments en feuille (46) ont la même forme.

5. Batterie du type empilé selon la revendication 1, comprenant en outre un conduit d'agent de refroidissement (51) auquel est raccordée ladite partie en saillie (47) et dans lequel circule un agent de refroidissement,
dans laquelle ledit élément en feuille (46) est disposé à chacun d'une pluralité d'emplacements décalés dans le sens de l'empilement de ladite pluralité de cellules unitaires (30),
dans laquelle une pluralité desdits éléments en feuille (46) inclut un premier élément en feuille (46m) agencé relativement à l'intérieur dans le sens de l'empilement de ladite pluralité de cellules unitaires (30) et un second élément en feuille (46n) agencé relativement à l'extérieur, et
dans laquelle ladite partie en saillie (47) est prévue de façon telle que la conductivité thermique entre ladite partie en saillie (47) dudit premier élément en feuille (46m) et l'agent de refroidissement est relativement grande et que la conductivité thermique entre ladite partie en saillie (47) dudit second élément en feuille (46n) et l'agent de refroidissement est relativement petite.

6. Batterie du type empilé selon la revendication 5, dans laquelle ladite partie en saillie (47) dudit premier élément en feuille (46m) est connectée au côté amont de l'écoulement d'agent de refroidissement dans ledit conduit d'agent de refroidissement (51), par comparaison avec ladite partie en saillie (47) dudit second élément en feuille (46n).
